# EUROPEAN PATENT APPLICATION

(11) **EP 3 626 774 A1**
(43) Date of publication of application: **25.03.2020**
(21) Application number: 18196299.4
(22) Date of filing: 24.09.2018
(51) Int. Cl.: C08L 23/06, C08L 23/08

(54) **POLYOLEFIN RESIN BLENDS FOR HIGH STRESS CRACKING RESISTANCE AND GOOD PROCESSABILITY**

(71) Applicant: Thai Polyethylene Co., Ltd., 10800 Bangkok (TH); SCG Chemicals Co., Ltd., Bangkok 10800 (TH)
(72) Inventor: Traisilanun, Saranya, 10800 Bangkok (TH); Nantasetphong, Wiroj, 10800 Bangkok (TH); Cheevasrirungruang, Watcharee, 10800 Bangkok (TH)
(74) Representative: Scholz, Volker

(57) **Abstract**

Polyethylene composition comprising a melt blend, the melt blend comprising:
a) a first multimodal polyethylene, the first multimodal polyethylene having a medium weight average molecular weight of a high weight average molecular weight, a density of more than 0.950 to 0.965 g/cm3 according to ISO 1183 and a MFR₂ of 0.3 to 2.0 g/10 min according to ISO 1133; and
b) a second multimodal polyethylene, the second multimodal polyethylene having a high weight average molecular weight, a density of 0.940 to 0.950 g/cm3 according to ISO 1183 and a MFR₂ of 0.03 to 0.15 g/10 min according to ISO 1133;
wherein the polymer composition has a Full Notch Creep Test (FNCT) according to ISO 16770 of at least 58 hours and a Charpy impact strength at a temperature of 23°C of at least 4 kJ/m² according to ISO 179.

## Description

The present invention relates to a polymer composition comprising blends of ethylene polymers of different molecular weight and density. More specifically the present invention relates to molded articles from injection, compression, and blow molding, in particular caps and closures comprising this polymer composition.

EP 2 746 334A1 discloses polyethylene blends with improved ESCR comprising 99.0 to 99.5 wt % of a lower molecular weight bimodal HDPE component and 0.5 to 10 wt% of a higher molecular weight bimodal HDPE wherein the blend has a density of at least 940 kg/m3 and a FNCT of at least 30 hours measured according to the Full Notch Creep Test (ISO 16770) at 50 °C and 6 MPa.

US 6,822,051 B2 discloses a polymer blend comprising a bimodal high molecular weight HDPE having a NCTL stress crack resistance of about 200 hours or greater and HDPE having a NCTL stress crack resistance of 24 hours. The compositions of this blend can be used for profile, pipe, chemical waste applications including sanitary sewer or irrigation piping systems.

US 3,717,054 B2 discloses a melt blend HDPE composition with enhanced physical properties, processability and environmental stress crack resistance that is used for manufacturing corrugated HDPE pipe.

US 7 867 588 B2 relates a melt blend of a linear low density polyethylene resin, a linear medium low density polyethylene resin and a high density polyethylene having a density of 0.945 to 0.960 g/cm³ and melt flow index of 0.1 to 0.4 that can be used for manufacturing of pipe storm sewer and in sanitary sewer applications.

It is an object of the present invention to provide a polymer composition overcoming drawbacks of the prior art, in particular being suitable for preparing molded particles from injection molding, compression molding, blow molding, and extrusion, in particular container closures, overcoming drawbacks of the prior art, in particular with respect to stress cracking resistance with good balance of stiffness and processability to achieve a high stress cracking resistance, for example, in a cap, and a good processability during injection. The object is achieved in accordance with the independent claims. Preferred embodiments result from the sub-claims.

The object is in particular achieved by a polyethylene composition comprising a melt blend, the melt blend comprising: a) a first multimodal polyethylene, the first multimodal polyethylene having a medium weight average molecular weight or a high weight average molecular weight, a density of more than 0.950 to 0.965 g/cm³ according to ISO 1183 and a MFR₂ of 0.3 to 2.0 g/10 min, preferably 0.8 to 10.0 g/10 min, according to ISO 1133; and b) a second multimodal polyethylene, the second multimodal polyethylene having a high weight average molecular weight, a density of 0.940 to 0.950 g/cm³ according to ISO 1183 and a MFR₂ of 0.03 to 0.15 g/10 min, preferably 0.003 to 0.05 g/10 min according to ISO 1133; wherein the polymer composition has a Full Notch Creep Test (FNCT) according to ISO 16770 of at least 58 hours and a Charpy impact strength at a temperature of 23°C of at least 4 kJ/m² according to ISO 179.

It has surprisingly been found by the present inventors that the inventive polyethylene composition has a better balance of stress cracking resistance, stiffness and processability as compared to known resins. In accordance with this invention it has been found that a blend of a first multimodal polyethylene and a second multimodal polyethylene as defined herein shows both desirable mechanical properties and processability during injection, extrusion, compression, and blow moulding . These effects are even more pronounced for the prepared embodiments (or combination of the preferred embodiments) mentioned below.

As used herein the term "comprising" may be "consisting of". For example, the polyethylene composition comprising the melt blend may be a polyethylene composition consisting of the melt blend.

In one embodiment, the polymer composition has a FNCT from 58 to 100 hours, preferably 60 to 90 hours, more preferably 60 to 85 hours, most preferably 60 to 77 hours.

In another embodiment, the polyethylene composition has a Charpy impact strength at a temperature of 23°C from 4 to 10 kJ/m², preferably 4.5 to 9 kJ/m².

Further, the first multimodal polyethylene is a bimodal polyethylene or a trimodal polyethylene and the second multimodal polyethylene is a bimodal polyethylene or a trimodal polyethylene, preferably one of the first multimodal polyethylene and the second multimodal polyethylene is a bimodal polyethylene and the other one of the first multimodal polyethylene and the second multimodal polyethylene is a trimodal polyethylene even more preferred the first multimodal polyethylene is a bimodal polyethylene and the second multimodal polyethylene is a trimodal polyethylene.

Even more preferred the first multimodal polyethylene is a bimodal polyethylene and the second multimodal polyethylene is trimodal polyethylene.

In a preferred embodiment, the bimodal polyethylene comprises 40 to 60% by weight, preferably 54 to 55% by weight of an ethylene homopolymer and 40 to 60% by weight and preferably 45 to 55% by weight of an ethylene copolymer, based on the total weight of the bimodal polyethylene respectively, wherein the ethylene copolymer comprises a co-monomer in an amount of at least 0.30 mol%, preferably 0.30 to 1.0 mol%, even more preferred 0.40 to 10 mol%, with respect to the total amount of monomer in the ethylene copolymer.

More preferably, the co-monomer is selected from the group consisting of 1-butene, 1-hexene, 1-octene and mixtures thereof, preferably 1-butene.

In a further embodiment the bimodal polyethylene has a MFR₂ of 0.02 to 1.0 g/10 min, preferably 0.3 to 1.0 g/10 min, according to ISO 1133 and/or a density of 0.945 to 0.960 g/cm³, according to ISO 1138.

In another embodiment the bimodal polyethylene has a weight average molecular weight of 100,000 to 400,000 g/mol, preferably 120,000 to 350,000 g/mol, even more preferred 140,000 to 320,000 g/mol, measured by gel permeation chromatography.

Preferably the trimodal polyethylene comprises:
(A) 30 to 65% by weight, preferably 43 to 65% by weight, most preferred 44 to 60% by weight, based on the total weight of the trimodal polyethylene, of a low molecular weight polyethylene, wherein the low molecular weight polyethylene has a MFR₂ of 500 to 1,000 g/10 min according to ISO 1133 and a weight average molecular weight (Mw) of 20,000 to 90,000 g/mol, measured by gel permeation chromatography;
(B) 5 to 40% by weight, preferably 10 to 20% by weight, most preferred 10 to 15% by weight, based on the total weight of the trimoldal polyethylene, of a first high molecular weight polyethylene or a first ultrahigh molecular weight polyethylene; and
(C) 20 to 60% by weight, preferably 25 to 60% by weight, most preferably 35 to 55% by weight, based on the total weight of the trimodal polyethylene, of a second high molecular weight polyethylene or a second ultrahigh molecular weight polyethylene.

The trimodal polymerization in the first, the second and the third reactor is conducted under different process conditions. As a result, the polyethylene obtained in each reactor has a different molecular weight. These can be the variation in concentration of ethylene and hydrogen in the vapor phase, temperature or amount of comonomer being fed to each reactor. Appropriate conditions for obtaining a respective homo- or copolymer of desired properties, in particularly of desired molecular weight, are well known in the art. The person skilled in the art is enabled on basis of his general knowledge to choose the respective conditions on this basis. Preferably, low molecular weight polyethylene or medium molecular weight polyethylene is produced in the first reactor, while high molecular weight polyethylene or ultra high molecular weight polyethylene is produced in the second and third reactor respectively.

The term first reactor refers to the stage where the low molecular weight polyethylene or the medium molecular weight polyethylene is produced. The term second reactor refers to the stage where the first high or ultra high molecular weight polyethylene is produced. The term third reactor refers to the stage where the second high molecular weight polyethylene or ultra high molecular weight is produced.

The term low molecular weight polyethylene polymer (LMW) means the polymerized ethylene monomer having a weight average molecular weight (Mw) of more than 20,000 to 90,000 g/mol.

The term medium molecular weight polyethylene polymer means (MMW) the polymerized ethylene monomer having a weight average molecular weight (Mw) of more than 90,000 to 200,000 g/mol.

The term high molecular weight polyethylene polymer (HMW1) means the polymerized ethylene monomer having a weight average molecular weight (Mw) of more than 200,000 to 1,000,000 g/mol.

The term ultra high molecular weight polyethylene polymer (HMW2) means the polymerized ethylene monomer having a weight average molecular weight (Mw) of more than 1,000,000 to 5,000,000 g/mol.

The LMW or MMW is produced in the first reactor in the absence of comonomer in order to obtain a homopolymer. In addition, the MMW, HMW1, or HMW2 ethylene copolymer is produced in the second and third reactor. The α-olefin comonomer that is useful for the copolymerization include C4-12, preferably 1-butene and 1-hexene, most preferably is 1-butene.

More preferably the trimoldal polyethylene has a weight average molecular weight from 80,000 to 500,000 g/mol, preferably 80,000 to 400,000 g/mol, preferably 150,000 to 350,000 g/mol, most preferred 150,000 to 300,000 g/mol, measured by gel permeation chromatography.

### The preparation of multimodal polyethylenes

The multimodal polyethylenes in this invention may be prepared using continuous multi-stage slurry polymerization at least two or more stage polymerization using the Ziegler-Natta catalyst or a single site or a metallocene catalyst.

### Preparation of bimodal polyethylene

The bimodal polyethylene may be produced using continuous two-stage slurry polymerization with hexane diluent using Ziegler-Natta catalyst. The ethylene is polymerized in the first reactor in the absence of comonomer in order to obtain polyethylene homopolymer fraction that is low average molecular weight (LMW) fraction. The LMW polyethylene polyethylene having density >0.965 g/cm³ and MFR2 in the range of 10-1000 g/10 min, more prepferably 100-900 g/10 min. The temperature in the first reactor ranges from 70-90°C, preferably 80-85°C. Hydrogen is fed to the first reactor so as to control the molecular weight of the polyethylene. The first reactor is operated at pressure between 250 and 900 kPa, preferably 400-850 kPa.

In the second, ethylene can be polymerized with or without α-olefin comonomer to form high molecular weight (HMW) polyethylene in the presence of the LMW polyethylene polyethylene obtained from the first reactor that is high molecular weight fraction. The α-olefin comomer that is useful for the copolymerization includes C4-12, preferably 1-butene and 1-hexene, more preferably 1-butene. The polymerization conditions of the second reactor are notably different from that of the first reactor. The temperature in the second reactor ranges from 65-90°C, preferably 68-80°C. Polymerization pressure in the second or third reactor ranges from 100-3000 kPa, preferably 150-900 kPa, more preferably 150-400 kPa.

### Preparation of trimodal polyethylene

The trimodal polyethylene may be produced using continuous three-stage slurry polymerization with hexane diluent using Ziegler-Natta catalyst. The ethylene is polymerized in the first reactor in the absence of comonomer in order to obtain high density LMW polyethylene or MMW polyethylene having density >0.965 g/cm³ and MFR2 in the range of 10-1000 g/10 min, more prepferably 100-900 g/10 min for LMW and 0.1-10 g/10 min for MMW. The temperature in the first reactor ranges from 70-90°C, preferably 80-85°C. Hydrogen is fed to the first reactor so as to control the molecular weight of the polyethylene. The molar ratio of hydrogen to ethylene in the vapor phase can be varied depending up on the target MFR. However, the preferred molar ratio ranges from 0.01-8.0, more preferably 0.01-6.0. The first reactor is operated at pressure between 250 and 900 kPa, preferably 400-850 kPa. Optionally, the unreacted hydrogen containing in the obtained polymerized polyethylene from the first reactor is removed in amount of 98.0 to 99.8% by weight of hydrogen, preferably 98.0 to 99.5% by weight of hydrogen and most preferred 98.0 to 99.1 % by weight of hydrogen before transferring to the second reactor.

The polymerization conditions of the second or third reactor are notably different from that of the first reactor. The temperature in the second and third reactor ranges from 65-90°C, preferably 68-80°C. Polymerization pressure in the second or third reactor ranges from 100-3000 kPa, preferably 150-900 kPa, more preferably 150-400 kPa.

In the second and third reactor, ethylene can be polymerized with or without α-olefin comonomer to form HMW1 or HMW2 polyethylene in the presence of the LMW polyethylene or MMW polyethylene obtained from the first reactor. The α-olefin comomer that is useful for the copolymerization includes C4-12, preferably 1-butene and 1-hexene, more preferably 1-butene.

In case that the melt blend comprises more than one bimodal polyethylene or more than one trimodal polyethylene, i.e. in case that both the first and the second multimodal polyethylene are bimodal polyethylenes or both the first and the second multimodal polyethylene are trimodal polyethylenes, each of the respective bi- or trimodal polyethylenes may independently from each other fulfill one or more of the above preferred conditions.

In a preferred embodiment the melt blend comprises 70 to 97% by weight, preferably 80 to 95% by weight, of the first multimodal polyethylene and 3 to 30% by weight, preferably 5 to 20% by weight of the second multimodal polyethylene, based on the total weight of the melt blend respectively.

In a preferred embodiment the polyethylene composition has a MFR₂ of 0.05 to 2.0 g/10 min, preferably 0.3 to 1.5 g/10 min, even more preferred 0.3 to 1.0 g/10 min, according to ISO 1133.

In a more preferred embodiment the polyethylene composition has a density from 0.945 to 0.960 g/cm³, preferably 0.950 to 0.959 g/cm³, even more preferred 0.952 to 0.957 g/cm³, according to ISO 1183.

In a most preferred embodiment the polyethylene composition has a weight average molecular weight of 80,000 to 500,000 g/mol, preferably 80,000 to 400,000 g/mol, most preferred 100,000 to 200,000 g/mol, measured by gel permeation chromatography; and/or a polydispersity index from 10 to 25, preferably, from 15 to 22. The object is further achieved by an article comprising the inventive polyethylene composition.

In this regard, it is preferred that the article is one selected of a blow molding, a pipe, a film, a cap, a closure, a wire, a cable and a sheet.

Preferably, the article is obtainable by injection molding, extrusion, blow molding or compression molding.

In accordance with the invention, it may be provided that two or more of the above embodiments are combined to prepare the inventive polyethylene composition.

In terms of the present invention, a melt blend is a blend of two or more constituents obtained by melting the respective constituents and mixing the melted constituents.

The term "multimodal" as used herewith, unless otherwise stated, refers to multimodality with respect to the molecular weight distribution. Usually, a polyethylene composition, comprising at least two polyethylene fractions, which have been produced under different polymerization conditions resulting in different (weight average) molecular weights and molecular weight distributions for the fraction, is referred to as "multimodal". The prefix "multi" relates to the number of distinguishable polymer fractions present in the polymer. The prefix "multi" can be used herein to refer to two or three or more than three distinguishable components in the polymer, preferably two or three. The form of the molecular weight distribution curve, i.e. the appearance of the graph of the polymer weight fraction as a function of its molecular weight, of a multimodal polymer will often show two or more maxima or is typically distinctly broadened in comparison with the curves of the individual fractions.

The term bimodal as used herein refers to a multimodal polymer comprising two components in the polymer distinguishable as explained above. The term trimodal as used herein refers to a multimodal polymer comprising three components in the polymer distinguishable as defined above.

Further features and advantages of the present invention can be taken from the following detailed description and the examples.

### Definition and measurement method

MFR₂ and MFR₅: Melt flow rate of polymer was measured according to ISO 1133 and indicated in g/10 min that determines the flowability of polymer under testing condition at 190 °C with load 2.16 and 5kg.

Density: Density of polymer was measured by observing the level to which a pellet sinks in a liquid column gradient tube, in comparison with standards of known density. This method is determination of the solid plastic after annealing at 100 °C following ISO 1183-2.

Comonomer content: The comonomer content was determined by high resolution ¹³C-NMR in mol%. ¹³C-NMR spectra were recorded by 500 MHz ASCENDTM, Bruker, with cryogenic 10 mm probe. TCB was used as major solvent with TCE-d2 as locking agent in the ratio of 4:1 by volume. The NMR experiments were carried on at 120 °C, and the inverse gate 13C (zgig) of pulse program with 90° for pulse angle were used. The delay time (D1) was set to 10 seconds for full-spin recovery.

Polydispersity index (PDI) and molecular weight: The weight average molecular weight (Mw), the number average molecular weight (Mn) and the Z average molecular weight (M_{Z}) in g/mol were analysed by gel permeation chromatography (GPC). Polydispersity index was calculated by Mw/Mn. Gel permeation chromatography (GPC): around 8 mg of sample was dissolved in 8 ml of 1,2,4-trichlorobenzene at 160 °C for 90 min. Then, the sample solution, 200 µl was injected into the high temperature GPC with IR₅, an infrared detector (Polymer Char), with low rate of 0.5 ml/min at 145 °C in column zone and 160 °C in detector zone. The data was processed by GPC One® Software, Polymer Char.

Crystallinity: The crystallinity is frequently used for characterization by Differential Scanning Calorimetry (DSC) follow ASTM D 3418. Samples were identified by peak temperature and enthalpy, as well as the % crystallinity was calculated from the peak area.

Shear thinning index [1/100] (SHI[1/100]): Rheological parameters are determined by using controlled stress rheometer model MCR-301 from Anton-Paar. The geometry is Plate-Plate 25 mm diameter at the measurement gap 1 mm. The dynamic oscillatory shear performs at angular frequency (ω) 0.01-600 rad/s at 190 °C under nitrogen atmosphere. The sample preparation is performed to circular disk 25 mm by compression molding at 190 °C. The shear thinning index is obtained from the ratio of complex viscosity at a specific shear rate 1 and 100 [1/s].

Tensile modulus: The specimens (type 1B) were compressed and performed the test according to ISO 527-2. The tensile modulus were done using a universal tensile testing machine with tension mode at speed 1 mm/min.

Charpy impact strength: The Charpy impact strength testing was done following ISO 179 to determine the impact resistance of materials. Its impact energy is determined. A notched sample is generally used to determine impact energy at temperature of 23 °C.

Full Notch Creep Test (FNCT): The full notch creep test according ISO 16770 was the preferred way of measuring the stress crack resistance of a polymer at constant load of 6 MPa at 50°C in 2% Arkopal solution.

### Examples

The exemplary polyethylene compositions described in the following were prepared in accordance with the above general description regarding "the preparation of multimodal polyethylene". The compositions for each example were prepared using melt blending techniques by twin screw extruder at temperature 220°C using different components and formulations as shown in Tables 1 and 2. The properties of polymer blend compositions for each example are shown in Table 3.

### Comparative Example 1

Comparative Example 1 is a trimodal polyethylene composition produced from Ziegler-Natta catalyst from reactor based which having the polymer composition as shown in Component #4 in Table 1. The % weight fraction ratio of the first ethylene homopolymer, the second ethylene copolymer and the third ethylene copolymer is 50:10:40. The Comparative Example 1 use 1-butene as comonomer in the composition.

### Example 1 (Inventive)

The example 1 was prepared by melt blending from 80 % weight fraction of the first bimodal polyethylene (Component #1) and 20 % weight fraction of the second bimodal polyethylene (Component#2), respectively. The Component#1 is the Ziegler-Natta catalyst based bimodal polyethylene and has the weight fraction ratio of the first ethylene homopolymer and the second ethylene copolymer equal to 50:50. The Component#2 is also the Ziegler-Natta catalyst based bimodal polyethylene and has the weight fraction ratio of the first ethylene homopolymer and the second ethylene copolymer equal to 52:48. Both the Component#1 and Component#2 use 1-butene as comonomer in the compositions and the detail properties of the Components #1 and #2 are shown in Table 1.

### Examples 2-3 (Inventive)

The example 2-3 were prepared by melt blending from 85, 90 % weight fraction of the first bimodal polyethylene (Component#1) and 15, 10 % weight fraction of the second trimodal polyethylene (Component#3), respectively. The Component#3 is the Ziegler-Natta catalyst based trimodal polyethylene which produced from slurry polymrization and has the weight fraction ratio of the first ethylene homopolymer, the second ethylene copolymer and the third ethylene copolymer equal to 43:19:38 and use 1-butene as comonomer. The detail properties of the Component#3 is shown in Table 1.

### Example 4 (Inventive)

The example 4 was prepared by melt blending from 80% weight fraction of the first trimodal polyethylene (Component#4) and 20% weight fraction of the second bimodal (Component#2), respectively.

The results given in Table 3 indicated that the inventive samples (Example 1-4) have significantly higher stress cracking resistance as shown in Full Notch Creep Test (FNCT) results more than 2 times and also impact strength as shown in Chary impact strength at 23 °C higher than trimodal polyethylene resin or Comparative example 1 without loss of stiffness and processability. The higher stress cracking resistance and impact strength of polymer blends come from the higher comonomer content and also higher the high molecular weight parts which shown in broader PDI than Comparative Example 1.

In addition, these inventive examples also show balance processability by SHI [1/100], even it show lower MFR range than Comparatives example 1. Higher Non-Newtonian index or SHI [1/100] means better processability by extrusion, injection, and blow molding.

From these polymer properties can have benefit for molded articles.

**Table 1. Properties of ethylene polymers**

| **Key properties** | **Unit** | **Component #1** | **Component #2** | **Component #3** | **Component #4** |
|---|---|---|---|---|---|
| | | **Bimodal PE** | **Bimodal PE** | **Trimodal PE** | **Trimodal PE** |
| **Mw of 1^{st} fraction ethylene homopolymer in 1^{st} reactor** | **g/mol** | **47,935** | **49,832** | **51,000** | **64,490** |
| **Mw of 2^{nd} fraction ethylene copolymer in 2^{nd} reactor** | **g/mol** | **163,051** | **290,000** | **218,000** | **193,778** |
| **Mw of 2^{nd} fraction ethylene copolymer in 3^{rd} reactor** | **g/mol** | **-** | **-** | **275,357** | **162,148** |
| **MFR₂ of Pellet** | **g/10 min** | **0.92** | **0.03** | **0.04** | **0.96** |
| **MFR₅ of Pellet** | **g/10 min** | **3.49** | **0.18** | **0.21** | **3.91** |
| **Density of Pellet** | **g/cm³** | **0.9565** | **0.949** | **0.9437** | **0.9567** |
| **Comonomer content (i-Butene) in Pellet** | **%mol** | **0.52** | **0.73** | **0.99** | **0.44** |
| **Mw of Pellet** | **g/mol** | **158,543** | **306,966** | **213,392** | **155,398** |
| **Mn of Pellet** | **g/mol** | **8,983** | **9,356** | **11,796** | **10,638** |
| **Mz of Pellet** | **g/mol** | **1,003,632** | **2,073,745** | **1,295,187** | **1,302,926** |
| **PDI of Pellet** | **-** | **17.65** | **32.81** | **18.09** | **14.61** |

**Table 2. Blend compositions of this invention**

| **example** | **CE1** | **EX1** | **EX2** | **EX3** | **EX4** |
|---|---|---|---|---|---|
| **1^{st} Multimodal component** | **Component #4 (Trimodal PE)** | **Component #1 (Bimodal PE)** | **Component #1 (Bimodal PE)** | **Component #1 (Bimodal PE)** | **Component #4 (Trimodal PE)** |
| **1^{st} component weight fraction (%)** | **100** | **80** | **90** | **85** | **80** |
| **2^{nd} Multimodal component** | **-** | **Component #2 (Bimodal PE)** | **Component #3 (Trimodal PE)** | **Component #3 (Trimodal PE)** | **Component #2 (Bimodal PE)** |
| **2^{nd} component weight fraction (%)** | **-** | **20** | **10** | **15** | **20** |

**Table 3. Physical properties of the blend compositions**

| **Key properties** | **CE1** | **EX1** | **EX2** | **EX3** | **EX4** |
|---|---|---|---|---|---|
| **MFR₂ [g/10 min]** | **0.96** | **0.43** | **0.72** | **0.55** | **0.37** |
| **Density [g/cm³]** | **0.9567** | **0.9551** | **0.9549** | **0.9543** | **0.9546** |
| **1-Butene content [%mol]** | **0.50** | **0.56** | **0.64** | **0.64** | **0.54** |
| **Mw [g/mol]** | **155,398** | **180,314** | **159,185** | **164,023** | **179,882** |
| **Mn [g/mol]** | **10,638** | **10,878** | **9,046** | **9,252** | **10,892** |
| **Mz [g/mol]** | **1,302,926** | **1,229,914** | **1,008,241** | **1,024,795** | **1,211,848** |
| **PDI** | **14.61** | **16.58** | **17.60** | **17.73** | **16.52** |
| **Crystallinity [%]** | **64.68** | **61.46** | **62.17** | **61.78** | **61.53** |
| **SHI [1/100]** | **7.2** | **9.4** | **7.4** | **7.7** | **9.4** |
| **Tensile modulus (ISO 527)-1B [MPa]** | **966** | **1043** | **991** | **988** | **971** |
| **Charpy impact strength @ 23°C (ISO 179) [kg/m²]** | **3.6** | **6.5** | **5.2** | **5.8** | **7.2** |
| **FNCT (ISO 16770) @50 °C, 6 MPa, 2%wt Arkopal [hr]** | **20** | **68** | **73** | **77** | **60** |

The features disclosed in the foregoing description and in the claims may, both separately and in any combination be material for realizing the invention in diverse forms thereof.

## Claims

1. Polyethylene composition comprising a melt blend, the melt blend comprising:
a) a first multimodal polyethylene, the first multimodal polyethylene having a medium weight average molecular weight of a high weight average molecular weight, a density of more than 0.950 to 0.965 g/cm³ according to ISO 1183 and a MFR₂ of 0.3 to 2.0 g/10 min according to ISO 1133; and
b) a second multimodal polyethylene, the second multimodal polyethylene having a high weight average molecular weight, a density of 0.940 to 0.950 g/cm³ according to ISO 1183 and a MFR₂ of 0.03 to 0.15 g/10 min according to ISO 1133;
wherein the polymer composition has a Full Notch Creep Test (FNCT) according to ISO 16770 of at least 58 hours and a Charpy impact strength at a temperature of 23°C of at least 4 kJ/m² according to ISO 179.

2. Polyethylene composition according to claim 1, wherein the polymer composition has a FNCT from 58 to 100 hours, preferably 60 to 90 hours, more preferably 60 to 85 hours.

3. Polyethylene composition according to claim 1 or 2, wherein the polyethylene composition has a Charpy impact strength at a temperature of 23°C from 4 to 10 kJ/m², preferably 4.5 to 9 kJ/m².

4. Polyethylene composition according to any of the preceding claims, wherein the first multimodal polyethylene is a bimodal polyethylene or a trimodal polyethylene and the second multimodal polyethylene is a bimodal polyethylene or a trimodal polyethylene, preferably one of the first multimodal polyethylene and the second multimodal polyethylene is a bimodal polyethylene and the other one of the first multimodal polyethylene and the second multimodal polyethylene is a trimodal polyethylene, even more preferred the first multimodal polyethylene is a bimodal polyethylene and the second multimodal polyethylene is trimodal polyethylene.

5. Polyethylene composition according to claim 4, wherein the bimodal polyethylene comprises 40 to 60% by weight, preferably 45 to 55% by weight of an ethylene homopolymer and 40 to 60% by weight, preferably 45 to 55% by weight, of an ethylene copolymer, based on the total weight of the bimodal polyethylene respectively, wherein the ethylene copolymer comprises a comonomer in an amount of at least 0.30 mol%, preferably 0.30 to 1.0 mol% with respect to the total amount of monomer in the ethylene copolymer.

6. Polyethylene composition according to claim 5, wherein the co-monomer is selected from the group consisting of 1-butene, 1-hexene, 1-octene, preferably 1-butene and mixtures thereof.

7. Polyethylene composition according to any of the claims 4 to 6, wherein the bimodal polyethylene has a MFR₂ of 0.02 to 1.0 g/10 min, preferably 0.3 to 1.0 g/10 min, according to ISO 1133 and/or a density of 0.945 to 0.960 g/cm³, according to ISO 1138.

8. Polyethylene composition according to any of the claims 4 to 7, wherein the bimodal polyethylene has a weight average molecular weight of 100,000 to 400,000 g/mol, preferably 120,000 to 350,000 g/mol, even more preferred 140,000 to 320,000 g/mol, measured by gel permeation chromatography.

9. Polyethylene composition according to any of the claims 4 to 8, wherein the trimodal polyethylene comprises:
(A) 30 to 65% by weight, preferably 43 to 65% by weight, most preferred 44 to 60% by weight, based on the total weight of the trimodal polyethylene, of a low molecular weight polyethylene, wherein the low molecular weight polyethylene has a MFR₂ of 500 to 1,000 g/10 min according to ISO 1133 and a weight average molecular weight (Mw) of 20,000 to 90,000 g/mol, measured by gel permeation chromatography;
(B) 5 to 40% by weight, preferably 10 to 20% by weight, most preferred 10 to 15% by weight, based on the total weight of the trimoldal polyethylene, of an ultrahigh molecular weight polyethylene; and
(C) 20 to 60% by weight, preferably 25 to 60% by weight, most preferably 35 to 55% by weight, based on the total weight of the trimodal polyethylene, of a high molecular weight polyethylene molecular weight polyethylene.

10. Polyethylene composition according to any of the claims 4 to 9, wherein the trimoldal polyethylene has a weight average molecular weight from 80,000 to 500,000 g/mol, preferably 80,000 to 400,000 g/mol, preferably 150,000 to 350,000 g/mol, most preferred 150,000 to 300,000 g/mol, measured by gel permeation chromatography.

11. Polyethylene composition according to any of the preceding claims, wherein the melt blend comprises 70 to 97% by weight, preferably 80 to 95% by weight, of the first multimodal polyethylene; and 3 to 30% by weight, preferably 5 to 20% by weight of the second multimodal polyethylene, based on the total weight of the melt blend respectively.

12. Polyethylene composition according to any of the preceding claims, wherein the polyethylene composition has a MFR₂ of 0.05 to 2.0 g/10 min, preferably 0.3 to 1.5 g/10 min, even more preferred 0.3 to 1.0 g/10 min, according to ISO 1133.

13. Polyethylene composition according to any of the preceding claims, wherein the polyethylene composition has a density from 0.945 to 0.960 g/cm³, preferably 0.950 to 0.959 g/cm³, even more preferred 0.952 to 0.957 g/cm³, according to ISO 1183.

14. Polyethylene composition according to any of the preceding claims, wherein the polyethylene composition has a weight average molecular weight of 80,000 to 500,000 g/mol, preferably 80,000 to 400,000 g/mol, most preferred 100,000 to 200,000 g/mol, measured by gel permeation chromatography; and/or a polydispersity index from 10 to 25, preferably, from 15 to 22.

15. Article comprising the polyethylene composition according to any of the preceding claims, wherein the Article is preferably a low molding, a pipe, a film, a cap, a closure, a wire, a cable or a sheet.
